(19) Europäisches Patentamt
European Patent Office
Office européen des brevets

(11) **EP 1 873 040 A2**

(12) **EUROPEAN PATENT APPLICATION**

(43) Date of publication:
**02.01.2008 Bulletin 2008/01**

(51) Int Cl.:
***B62D 5/04*** *(2006.01)*

(21) Application number: **07012067.0**

(22) Date of filing: **20.06.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **28.06.2006 JP 2006177473**

(71) Applicant: **NSK Ltd.**
**Tokyo 141-8560 (JP)**

(72) Inventor: **Maeda, Masahiro**
**Maebashi-shi**
**Gunma 371-8527 (JP)**

(74) Representative: **Grünecker, Kinkeldey,**
**Stockmair & Schwanhäusser**
**Anwaltssozietät**
**Maximilianstrasse 58**
**80538 München (DE)**

(54) **Control device for electric power steering apparatus**

(57)     A control device for an electric power steering apparatus has a motor (3) which applies a steering assist force and a driving control device which drives the motor (3), the driving control device has a gate driving circuit (120) which drives a motor driving bridge circuit (110) based on a command from a computer (100), the power supply portion of the gate driving circuit has a voltage limit unit, and there is provided with a function of driving the lower side driving elements of the motor driving bridge circuit when the voltage limit unit detects the abnormally high voltage of the power supply voltage.

## FIG. 1

**Description**

BACKGROUND OF THE INVENTION

1. Field of the Invention

The present invention relates to a control device for an electric power steering apparatus which applies a steering assistance force to the steering system of an automobile or a vehicle and, in particular, relates to a high-performance control device for an electric power steering apparatus which reduces an operational amount required for a driver due to the abrupt release of a torsional force of tires caused when the steering assistance is stopped due to the abnormal high voltage of a power supply thereby to improve the driver's feeling so that the driver does not feel a sense of incongruity.

2. Description of Related Art

The electric power steering apparatus, for applying a steering assist torque to a steering device of an automobile or a vehicle by a rotation power of a motor, is arranged in a manner that the driving force of the motor is applied to a steering shaft or a rack shaft by a transmission mechanism such as a gear or a belt via a reducer so as to assist driver's steering power. Such the electric power steering apparatus of the related art performs feedback control of motor current in order to accurately generate an assist torque (steering assist torque). In the feedback control, voltage applied to the motor is adjusted so as to reduce a difference between a current command value and a motor current detection value. The adjustment of the voltage applied to the motor is generally performed by adjusting a duty ratio for PWM (pulse width modulation) control.

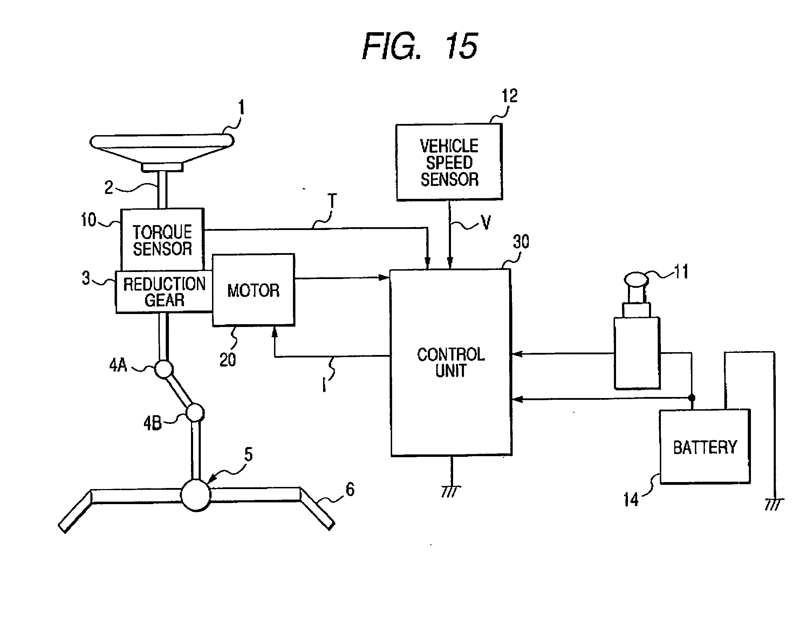

The general configuration of the electric power steering apparatus will be explained with reference to Fig. 15. A column shaft 2 of a steering wheel 1 is coupled to tie rods 6 of wheels via a reduction gear 3, universal joints 4A, 4B and a pinion rack mechanism 5. The column shaft 2 is provided with a torque sensor 10 for detecting the steering torque of the steering wheel 1. A motor 20 for assisting the steering power of the steering wheel 1 is coupled to the column shaft 2 via the reduction gear 3. A control unit 30 for controlling the power steering device is supplied with electric power from a battery 14 and an ignition signal from an ignition key 11. The control unit 30 calculates the steering assist command value Iref of an assist command based on a steering torque T detected by the torque sensor 10 and a vehicle speed V detected by a vehicle speed sensor 12 and controls a current supplied to the motor 20 based on the thus calculated steering assist command value Iref.

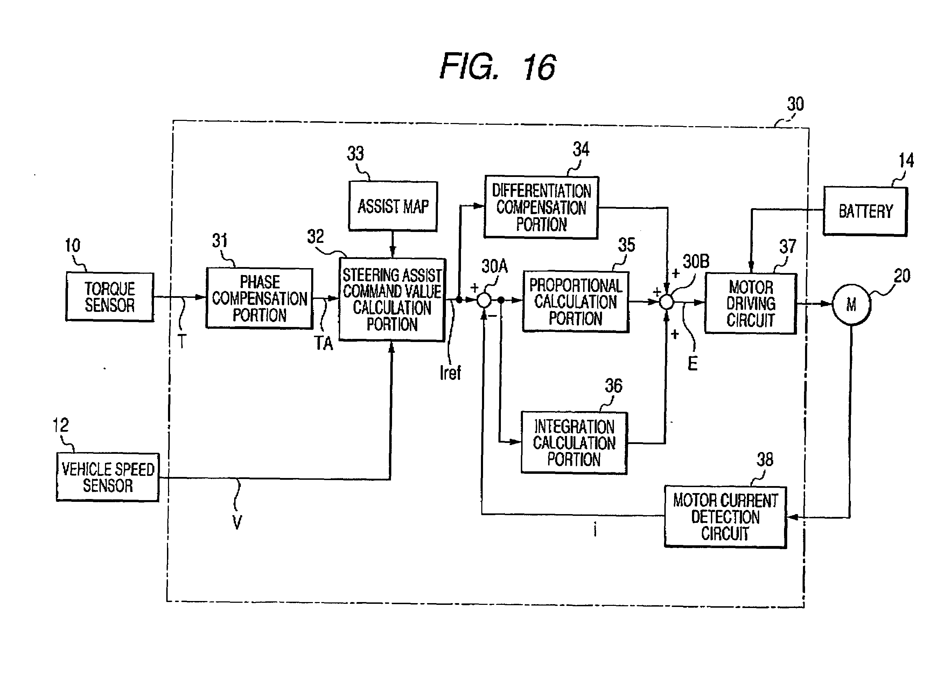

The control unit 30 is mainly constituted by a CPU (or an MPU (Micro Processing Unit) or an MCU (Micro Controller Unit)). General function executed by a program within the CPU will be shown in Fig. 16.

The function and operation of the control unit 30 will be explained with reference to Fig. 16. The steering torque T, which is detected by the torque sensor 10 and inputted into the control unit, is subjected to phase compensation by a phase compensation portion 31 in order to improve the safety of the steering system. The phase-compensated steering torque TA is inputted into a steering assist command value calculation portion 32. The vehicle speed V detected by the vehicle speed sensor 12 is also inputted into the steering assist command value calculation portion 32. The steering assist command value calculation portion 32 determines the steering assist command value Iref, which is a control target value of the current supplied to the motor 20, with reference to an assist map (lookup table) 33 based on the steering torque TA and the vehicle speed V having been inputted.

The steering assist command value Iref is inputted into a subtraction portion 30A and also inputted into a differentiation compensation portion 34 of a feed forward system in order to improve the response speed. A deviation (Iref - i) obtained in the subtraction portion 30A is inputted into a proportional calculation portion 35 and also inputted into an integration calculation portion 36 in order to improve the characteristics of a feedback system. The proportional output of the proportional calculation portion 35 and the output of the integration calculation portion 36 are inputted into an adding portion 30B. The output of the differentiation compensation portion 34 is also inputted into the adding portion 30B. A current command value E as the adding result of the adding portion 30B is inputted into a motor driving circuit 37 as a motor driving signal. The motor current i of the motor 20 is detected by a motor current detection circuit 38. The motor current detection value i is inputted into the subtraction portion 30A as a feedback input. The motor driving circuit 37 is configured by an H bridge (in the case of a two-phase motor) or a three-phase bridge (in the case of a three-phase motor) of driving elements such as an FET (Field Effect Transistor) or an IGBT (Insulated Gate Bipolar Transistor).

In such the electric power steering apparatus, the assist operation is stopped by the motor control in such a case where the ignition key 11 is switched to an off state from an on state or a case where a stop signal is generated from a failure diagnosing means (not shown) for detecting the failure of the control device.

In such the assist stop state, the assist force assisting the steering force of the driver is abruptly lost. In this case, because the tires are twisted against a reaction force from the road surface, when the assist force is abruptly lost, whole of the reaction force applied to the tire from the road surface is directly transmitted to the steering wheel. Therefore, the load required to steer the steering wheel is abruptly increased and the driver feels sense of incongruity.

Further, when the power supply voltage increases to an abnormal high value, the output voltage of a gate driving circuit for driving a motor driving circuit 37 exceeds the gate-source resist voltage (for example, ±20 volts) of the driving element (an FET or IGBT etc.), so that there arises a problem that the motor can not be driven anymore and the steering assist operation stops. For example, when a battery terminal is disconnected, since the function of smoothing the generated voltage of an alternator disappears, there arises a high-voltage surge (load dump surge). In this case, when the steering assist operation stops abruptly, there arises a problem that a torsional force of tires is released abruptly and so a driver feels a sense of incongruity.

As a measure in the case where the motor is stopped due to the stop of the assist operation, Japanese Patent Examined Publication JP-B-3399226 discloses an electric power steering apparatus. The electric power steering apparatus disclosed in the JP-B-3399226 is arranged in a manner that there is provided with a short-circuit means for short-circuiting between the terminals of the motor for a predetermined time at the time of stopping the motor while a steering assist torque is generated, and the short-circuit means has a returning force estimating means for estimating the returning force of the torsion of the steering system, whereby the short-circuit is made between the terminals of the motor when the returning force is a predetermined value or more.

However, in the electric power steering apparatus disclosed in the JP-B-3399226, since the short-circuit means and the returning force estimating means are provided, the configuration and control are complicated and the cost of the device is high. Further, when the power voltage becomes an abnormally high value, there arises a problem that the gate-source voltage of the FET increases and so the FET can not be driven. Furthermore, in the case of the short-circuit between the terminals where the short-circuit occurs between the terminals of the motor, there arises a problem that a braking amount of an electromagnetic brake can not be adjusted.

SUMMARY OF THE INVENTION

The invention is made in view of the aforesaid circumstance of the related art and an object of the invention is to provide a control device for an electric power steering apparatus of a low cost configuration which, even if a power supply voltage increases to an abnormally high voltage, the electromagnetic braking operation of a motor is used to reduce a load of a driver at the time of the stop of a steering assist operation thereby to prevent a driver from feeling a sense of incongruity.

According to a first aspect of the invention, there is provided a control device for an electric power steering apparatus which comprises a motor applying a steering assist force,
the control device driving the motor and comprising:

a gate driving circuit which drives a motor driving bridge circuit based on a command from a computer, wherein
a power supply portion of the gate driving circuit comprises a voltage limit unit, and
a lower side driving elements of the motor driving bridge circuit is driven when the voltage limit unit detects an abnormally high voltage of a power supply voltage.

According to a second aspect of the invention, as set forth in the first aspect of the invention, it is preferable that when the abnormally high voltage of the power supply voltage is detected, the lower side driving elements are turned on while each of upper side driving elements of the motor driving bridge circuit is kept to an off state thereby to operate the motor as an electromagnetic brake.

According to a third aspect of the invention, as set forth in the second aspect of the invention, it is preferable that necessity of an operation of the electromagnetic brake is determined based on a SAT.

According to a fourth aspect of the invention, the control device as set forth in the first aspect of the invention, further comprising:

a storing unit that stores a steering state just before detection of the abnormally high voltage of the power supply voltage, wherein
when the abnormally high voltage of the power supply voltage is detected, each of the lower side driving elements is subj ected to an on/off control in accordance with the steering state to control the electromagnetic brake.

According to a fifth aspect of the invention, the control device as set forth in the fourth aspect of the invention, further comprising:

a direction determining unit that determines a direction to which the electromagnetic brake acts based on a direction of a steering torque, wherein

one of the lower side driving elements to be turned on is selected in accordance with the determined direction to which the electromagnetic brake acts.

According to sixth aspect of the invention, there is provided an electric power steering apparatus comprising:

a motor applying a steering assist force; and
a control device that drives the motor and comprises:

a gate driving circuit which drives a motor driving bridge circuit based on a command from a computer, wherein

a power supply portion of the gate driving circuit comprises a voltage limit unit, and
a lower side driving elements of the motor driving bridge circuit is driven when the voltage limit unit detects an abnormally high voltage of a power supply voltage.

According to the control device for an electric power steering apparatus of the invention, since the power supply portion of the gate driving circuit for driving the motor driving bridge circuit is provided with the voltage limit unit for limiting the voltage, even if the power supply voltage becomes the abnormally high voltage, the gate-source voltage of the driving element (FET, IGBT etc.) for driving the motor can be prevented from exceeding the resist voltage thereof. Thus, the lower side driving elements of the motor driving bridge circuit can be driven at the time of the high voltage. As a result, even in the high voltage state where the steering assist operation is inevitably required to be stopped in the related art, the electromagnetic brake using the motor can be acted. Thus, an operation amount required for a driver can be reduced and so the driver does not feel a sense of incongruity.

Further, according to the invention, since the on/off duty ratio of the lower side driving element of the motor driving bridge circuit can be adjusted, the motor can be controlled continuously from the electromagnetic braking state (the duty ratio of the lower side driving element is 100%) to the release state of the motor (the duty ratio of the lower side driving element is 0%). Thus, after the kick back due to the torsion of a tire is avoided by the electromagnetic braking state, the motor can be shifted gradually to the release state, advantageously.

Further, when the power supply voltage reaches the abnormally high voltage, a computer (CPU, MPU, MCU etc.) controls the duty ratio of the lower side driving elements of the motor driving bridge circuit so as to act the electromagnetic brake in accordance with the rotation direction of the motor. For example, in the case of a sudden kick back due to the torsion of a tire, the electromagnetic brake is operated. In the case where a driver further rotates the steering wheel, the electromagnetic brake is not operated. Accordingly, it is possible to switch smoothly to a more-safety manual steering operation.

The control device for the electric power steering apparatus according to the invention is provided with a voltage limit unit at the power supply portion of the gate driving circuit in order to prevent that even if the power supply voltage becomes the abnormally high voltage, the gate-source voltage of the driving element (FET, IGBT etc.) can be prevented from exceeding the resist voltage thereof. Thus, burden required for a driver at the time of the high voltage can be reduced and so the driver does not feel a sense of incongruity.

Further, when the power supply voltage reaches the abnormally high voltage, since the electromagnetic brake is operated in accordance with the steering state, the kick back can be eliminated and it is possible to switch smoothly to the more-safety manual steering operation.

BRIEF DESCRIPTION OF THE DRAWINGS

Fig. 1 is a block diagram showing an example of the configuration (three-phase brushless motor) of the control device for an electric power steering apparatus according to the invention;
Fig. 2 is a wired diagram showing a part of an example of the configuration of a gate driving circuit according to the invention;
Fig. 3 is a wired diagram showing a part of an example of the configuration of a gate driving circuit of a related art;
Fig. 4 is a diagram for explaining the operable voltage range of an upper side FET;
Fig. 5 is a diagram for explaining the operable voltage range of a lower side FET;
Fig. 6 is a flow chart showing an example of the operation of the invention (first embodiment);
Fig. 7 is a timing chart showing the example of the operation of the invention (first embodiment);
Fig. 8 is a block diagram showing another example of the configuration (brush motor) of the control device for an electric power steering apparatus according to the invention;
Fig. 9 is a diagram for explaining the relation between the generation of kick back and an input torque of a driver;

Fig. 10 is a flow chart showing an example of the operation of the invention (second embodiment);

Fig. 11 is a timing chart showing the example of the operation of the invention (second embodiment);

Fig. 12 is a diagram for explaining the electromagnetic brake of a brushless motor;

Fig. 13 is a diagram for explaining the electromagnetic brake of the brushless motor;

Fig. 14 is a diagram for explaining the electromagnetic brake of a brush motor;

Fig. 15 is a diagram for explaining an example of the general configuration of an electric power steering apparatus; and

Fig. 16 is a diagram for explaining an example of the configuration of a control unit.

DETAILED DESCRIPTION OF EXEMPLARY EMBODIMENTS OF THE INVENTION EMBODIMENTS

Hereinafter, embodiments of the inventionwill be explained with reference to the drawings. The embodiments of the invention will be explained as to an example where a three-phase (U, V, W-phases) brushless motor is used as a steering assist motor.

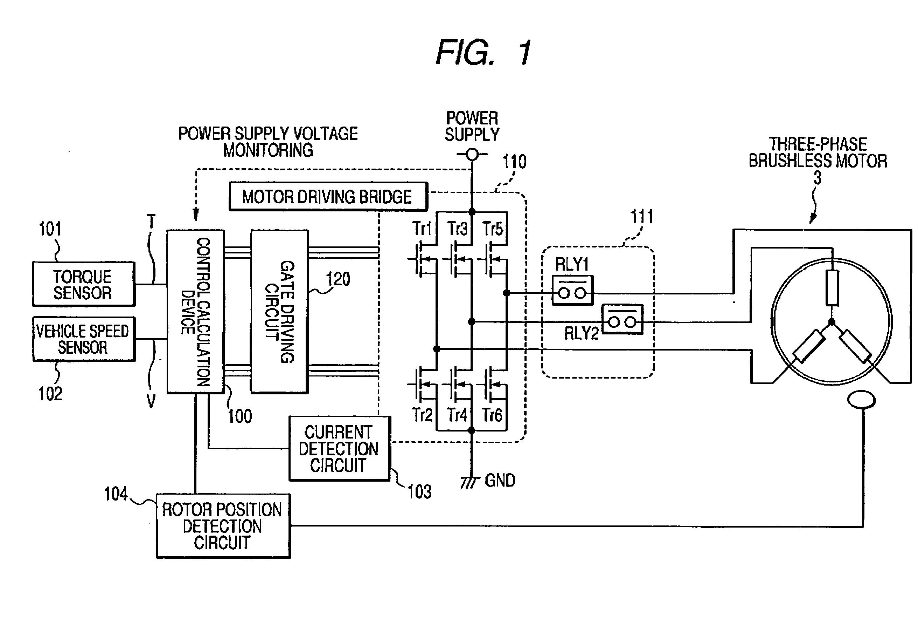

Fig. 1 shows an example of the configuration of the control device for an electric power steering apparatus according to the invention. In the figure, a steering torque T from a torque sensor 101 and a vehicle speed V from a vehicle speed sensor 102 are inputted into a control calculation device 100 configured by a computer (CPU, MPU, MCU etc.). A steering assist command value calculated by the control calculation device 100 is inputted into a gate driving circuit 120. The gate driving circuit 120 controls on/off operation of each of FETs (Tr1 to Tr6) serving as driving elements of a motor driving bridge circuit 110 based on a steering assist command value, thereby driving a motor 130 in accordance with direction and magnitude of the steering assist command value. An interruption device 111 is disposed between the motor driving bridge circuit 110 and the motor 130. The motor 130 is coupled to a rotor position detection circuit 104 and the motor driving bridge circuit 110 is coupled to a current detection circuit 103 for detecting a motor current.

The control calculation device 100 monitors the power supply voltage. The control calculation device 100 detects that the power supply voltage exceeds a predetermined threshold value to reach an abnormally high voltage, and stores and controls a steering state just before the detection of the abnormally high voltage. The control calculation device 100 further includes an SAT estimationportion for estimating (or detecting) an SAT and compares the SAT value thus estimated with a prescribed value (about 10N of a steering torque, for example) to determine whether or not the electromagnetic brake is necessary to be operated. Further, in the embodiment, the FETs Tr1, Tr3 and Tr5 constitute the upper side driving elements (upper side FETs) of the bridge circuit and the FETs Tr2, Tr4 and Tr6 constitute the lower side driving elements (lower side FETs) of the bridge circuit. The interruption device 111 is configured by relays RLY1, RLY2, for example, and interrupts the U and V phases of the three phases in this embodiment.

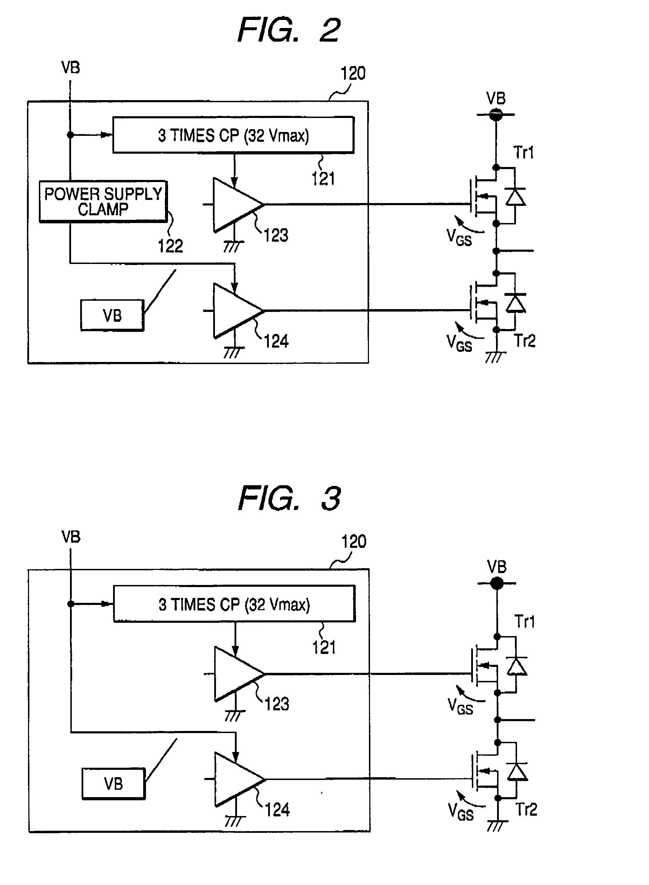

As shown in Fig. 2, the gate driving circuit 120 is configured in a manner that the gate driving element 123 of the upper side FET Tr1 is supplied with a power supply voltage VB via a boost circuit 121. The gate driving element 124 of the lower side FET Tr2 is supplied with the power supply voltage VB via a voltage clamp circuit 122 having a voltage limit unit. As shown in Fig. 3, in the related art, a voltage clamp circuit is not provided at the gate driving element 124 of the lower side FET Tr2. The boost circuit 121 of Figs. 2 and 3 has the maximum value of 32 V at the time of a three-times CP (charge pump), for example.

Al though the gate driving circuit 120 is configured as shown in Fig. 2 in the invention, the gate driving circuit of the related art is configured as shown in Fig. 3 in a manner that the power supply voltage VB is used as a power supply of the output buffer of the lower side FET Tr2 as it is. Thus, when the power supply voltage VB becomes a high voltage, since this power supply voltage exceeds the resist voltage (for example, $Vgs = \pm20$ V) between the gate and the source of the FET Tr2, the FET Tr2 can not be driven any more. On the other hand, a voltage obtained by boosting the power supply voltage VB by the boost circuit 121 is supplied as the power supply for the output buffer for driving the gate of the upper side FET Tr1. The boost circuit 121 includes a voltage limit circuit for protecting from the overvoltage. Thus, when the power supply voltage VB becomes a high voltage, there arises a problem that the gate-source resist voltage necessary for driving the FET Tr1 can not be secured and so the FET Tr1 can not be driven. According to the invention, since the voltage clamp circuit 122 is provided at the lower side FET Tr2, the operation range of the lower side FET Tr2 can be expanded.

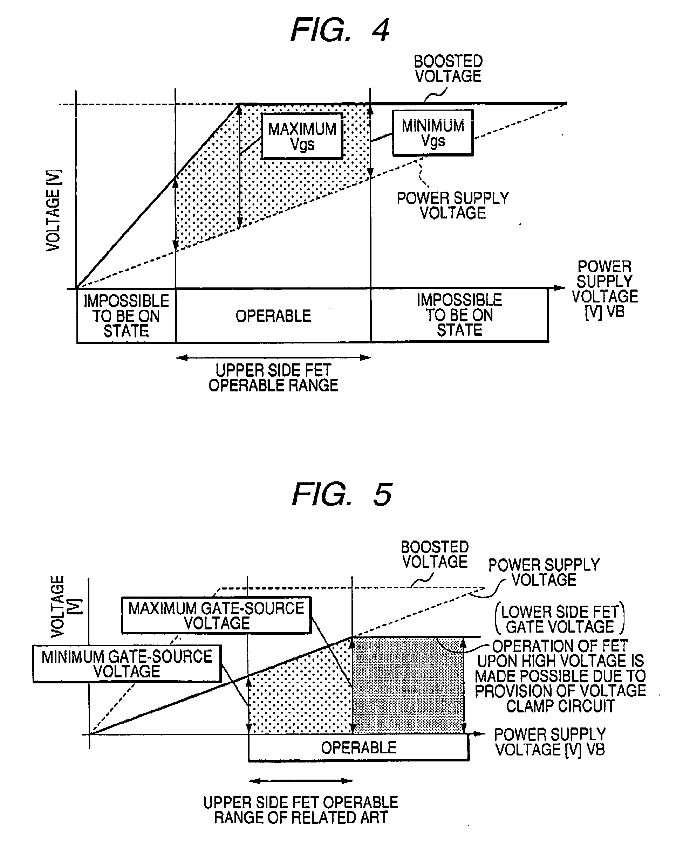

Fig. 4 is a diagram for explaining the operable voltage range of the upper side FET with respect to the power supply voltage VB. Supposing that the source voltage is same as the power supply voltage, the gate voltage is same as the voltage limit value and the on voltage of the FET is 5 V, the upper side FET can not be turned on when the power supply voltage VB is 27 V or more. That is, in the gate driving circuit of the related art shown in Fig. 3, each of the lower side FET and the upper side FET is placed in a state that the FET can not be driven when the power supply voltage VB has a high value. Vgs in Fig. 4 depicts a gate-source voltage.

As shown in Fig. 2, the gate driving circuit 120 of the invention is arranged in a manner that the voltage clamp circuit 122 for limiting a voltage is disposed between the power supply voltage VB and the power supply of the output buffer for driving the gate of the lower side FET Tr2. Thus, even when the power supply voltage VB increases to an abnormally high value, the gate-source voltage of the FET Tr2 does not exceed the resist voltage thereof and so the FET Tr2 can be driven continuously.

Fig. 5 is a diagram for explaining the operable voltage range of the lower side FET with respect to the power supply voltage VB. In this case, since the maximum voltage between the gate and the source does not become larger than a predetermined value even if the power supply voltage VB becomes a high value, the operation range of the lower side FET Tr2 can be expanded.

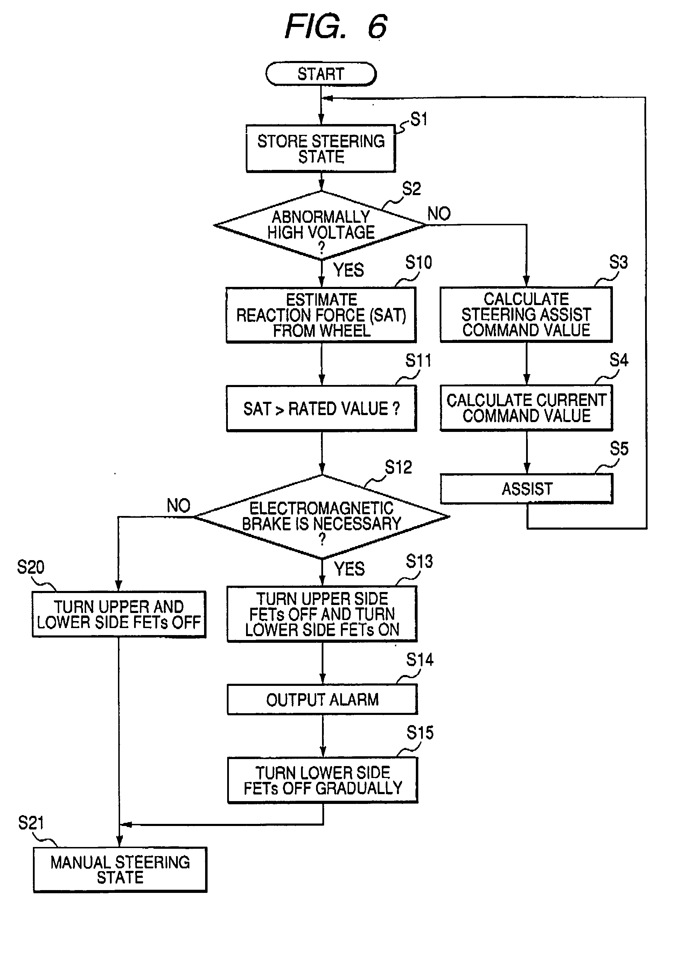

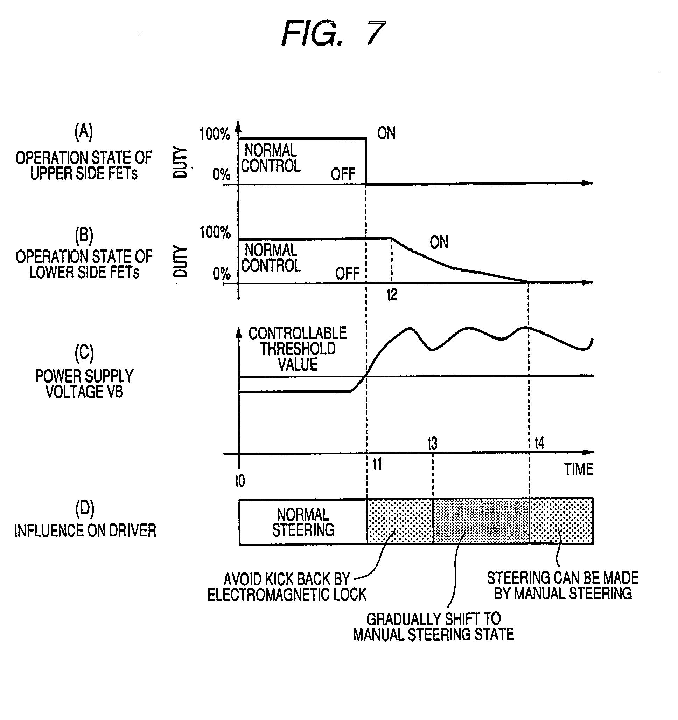

An example of the operation of such a configuration of the invention will be explained with reference to a flowchart shown in Fig. 6 and a time chart shown in Fig. 7. Fig. 7(A) shows the on/off state of the upper side FETs (Tr1, Tr3, Tr5), Fig. 7(B) shows the on/off state of the lower side FETs (Tr2, Tr4, Tr6), Fig. 7(C) shows the relation between the power supply voltage VB and a controllable threshold value and Fig. 7(D) shows the influence on a driver.

The control calculation device 100 always detects and stores the steering state (step S1) and determines by using the power supply voltage monitoring function thereof whether or not the power supply voltage VB is an abnormally high voltage exceeding the controllable threshold value (step S2). When the power supply voltage is not the abnormally high voltage but in a normal state (a period from a time point to to a time point t1 in Fig. 7), the control calculation device calculates the steering assist command value based on the steering torque T and the vehicle speed V (step S3) and further calculates the current command value based on the steering assist command value thus calculated, the motor current and the rotor position (step S4). Then, the control calculation device drives the motor 130 via the gate driving circuit 120 and the motor driving bridge circuit 110 based on the current command value thus calculated to execute the assist operation (step S5). Thereafter, the procedure is returned to step S1 and these steps are repeated.

On the other hand, when the power supply voltage VB is determined to be the abnormally high voltage exceeding the controllable threshold value in step S1 (the time point t1 in Fig. 7), for example, when the power supply voltage VB increases due to the load dump surge etc. resulted from the disconnection of the battery terminal etc. during the steering operation of a driver, the control calculation device 100 estimates the SAT as a reaction force from a tire based on the steering state (for example, the steering angle, the steering speed or the steering assist command value) just before the timing where the power supply voltage reaches the abnormally high voltage (step S10) and calculates a necessary braking amount of the electromagnetic brake based on the SAT thus estimated (step S11).

The estimation of the SAT may be made in accordance with a method disclosed in Japanese Patent Unexamined Publication JP-A-2002-369565, for example.

That is, torque transmission from steering wheel to a road surface is such that driver steers the steering wheel to generate the steering torque T and assist torque Tm in accordance with this steering torque T. As a result, wheels are rotated and steered and the SAT is generated as a reaction force. At this time, a torque acting as resistance to the steering operation of the steering wheel is generated by the inertia J and the friction (static friction) Fr of the motor. A dynamic equation shown by the following expression (1) can be obtained in view of the balance of these forces.

(Expression 1)

$$J \cdot \omega a + Fr \cdot sign(\omega) + SAT = Tm + T$$

Then, the expression (1) is subjected to the Laplace transformation supporting that the initial value is 0 so as to solve as to the SAT, the following expression (2) is obtained.

(Expression 2)

$$SAT(s) = Tm(s) + T(s) - J \cdot \omega a(s) - Fr \cdot sign(\omega(s))$$

As clear from the expression (2), when the inertia J and the friction Fr of the motor are obtained in advance as constants, the SAT can be estimated from a motor rotational angular speed $\omega$, a rotational angular acceleration speed $\omega a$, a steering assist force and a steering signal. It is possible to use a SAT value detected by a sensor in place of the estimation value of the SAT.

Thereafter, the estimated SAT value is compared with a rated value (for example) to determine whether or not it is necessary to operate the electromagnetic brake with respect to the motor 130 (step S12). That is,

(1) when the SAT is larger than the rated value, it is determined that the electromagnetic brake is necessary, whilst
(2) when the rated value is equal to or larger than the SAT, it is determined that the electromagnetic brake is not necessary and the assist operation is stopped immediately.

When it is determined that the electromagnetic brake is necessary in the aforesaid manner, as shown in Figs. 7 (A) and (B), all the upper side FETs (Tr1, Tr3, Tr5) are immediately turned off and all the lower side FETs (Tr2, Tr4, Tr6) are immediately turned on, and these states of the FETs are fixed (step S13). Accordingly, the electromagnetic brake is operated to suppress the kick back operation due to the torsion of the tire thereby to reduce the sense of incongruity affected on a driver. When all the lower side FETs (Tr2, Tr4, Tr6) are turned on, the motor 130 is placed in the electromagnetic lock state and so the abrupt returning of the steering wheel can be prevented. At this time, an alarm is given to notify a driver by means of visual or sound.

Thereafter (at a time point t2 in Fig. 7), as shown in Fig. 7 (B), the lower side FETs (Tr2, Tr4, Tr6) are turnedoff gradually (step S15) and the electromagnetic braking state is shifted to a manual steering state smoothly and safely (step S21). In Fig. 7 (D), the state has shifted to the manual steering state. In step S12, when it is determined that the electromagnetic brake is not necessary, both the upper side FETs (Tr1, Tr3, Tr5) and the lower side FETs (Tr2, Tr4, Tr6) are turned off to quickly shift to the manual steering state (step S20).

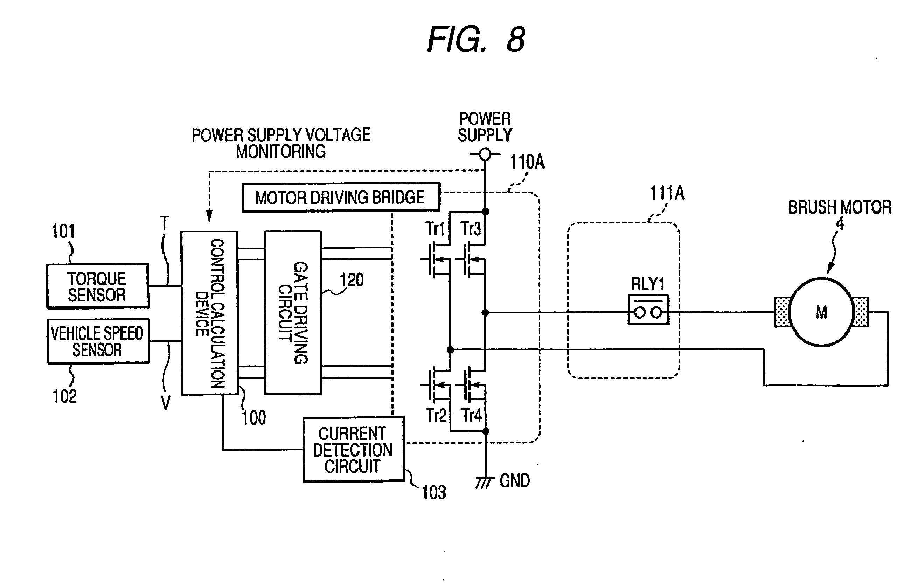

Although the explanation is made as to the configuration and operation in the case of performing the assisting operation by us ing the three-phase brushless motor, such the configuration and operation can also be realized by using a brush motor in the same manner. Fig. 8 shows an example of the configuration in the case of driving and controlling a two-phase brush motor 140, which is arranged so as to correspond to Fig. 1. In this case, a motor driving bridge circuit 110A is configured by an H bridge in correspondence to the two phases and an interruption device 111A of only single phase is disposed between the motor driving bridge circuit 110A and the brush motor 140. Further, since the brush motor 140 is employed, the rotor position detection circuit 104 is not necessary. According to this example, the control similar to the aforesaid embodiment can be made and the effect similar thereto can be obtained.

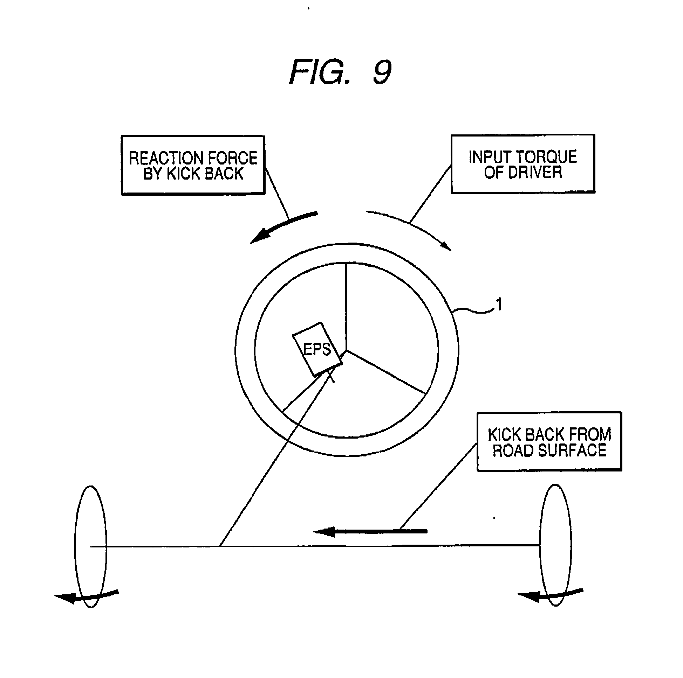

The main cause of a sense of incongruity felt by a driver in the steering operation is the kick back phenomenon. As shown in Fig. 9, according to the kick back phenomenon, the assist motor rotates in the opposite direction to the steering torque of the driver by the kick back from the road surface. That is, the driver receives a reaction force due to the kick back at the steering wheel 1. In order to remove the influence of the kick back, the electromagnetic brake control is performed in the case where the differential value of the output of the rotation sensor of the motor is in opposite in the direction to the steering torque T of the torque sensor 101. In contrast, an amount of the electromagnetic brake is set to 0, that is, the electromagnetic brake is not performed when these directions are the same. As a result, at the time of the occurrence of the abnormally high voltage, a driver's feeling of a sense of incongruity as to the steering operation with respect to the kick back operation can be reduced. Further, when the steering wheel rotates in the same direction as the input torque, the operation can be immediately shifted to the manual steering state.

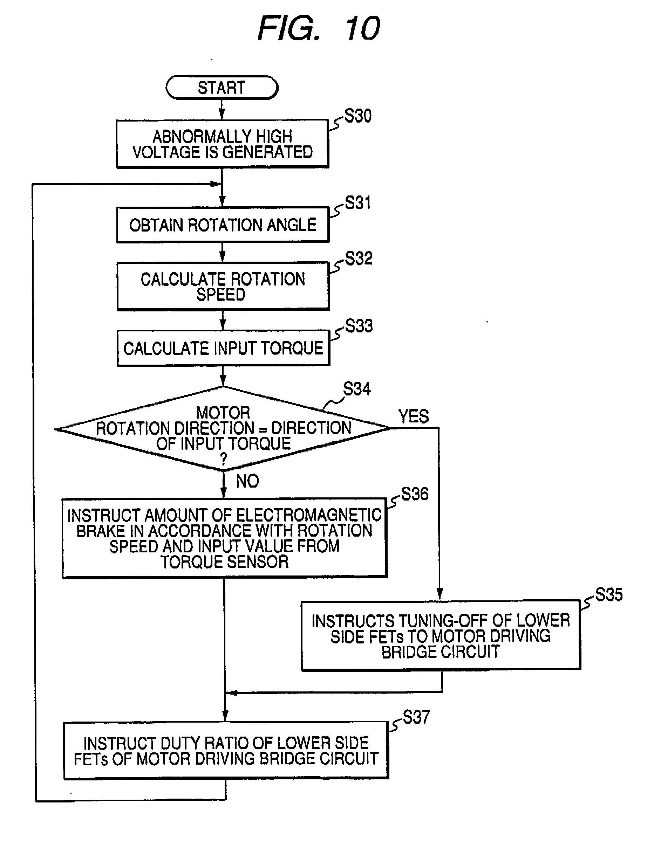

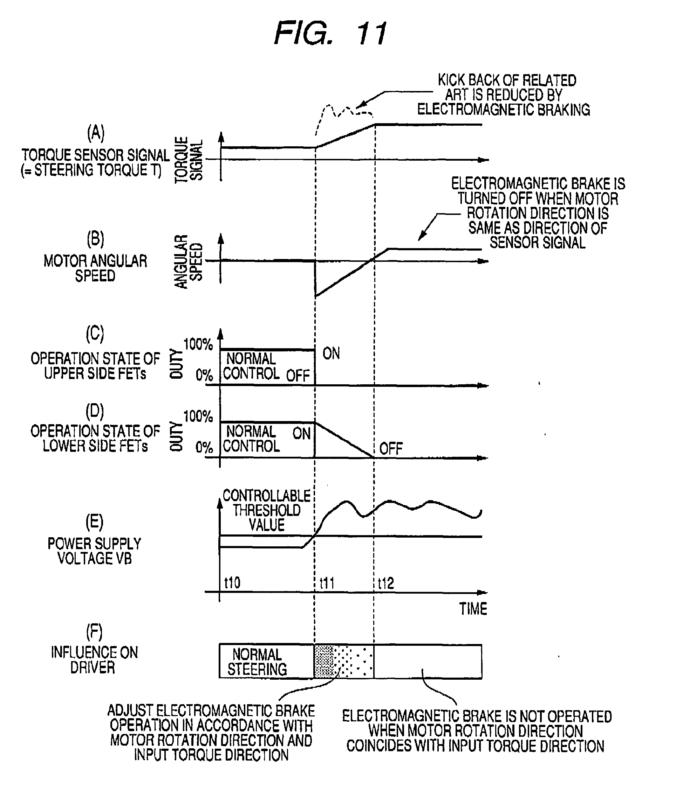

An example of the operation in the case of removing the aforesaid influence of the kick back will be explained with reference to a flowchart shown in Fig. 10 and a time chart shown in Fig. 11. Fig. 11(A) shows the steering torque T outputted from the torque sensor 101, Fig. 11(B) shows the motor angular speed, Fig. 11(C) shows the on/off state of the upper side FETs (Tr1, Tr3, Tr5), Fig. 11(D) shows the on/off state of the lower side FETs (Tr2, Tr4, Tr6), Fig. 11 (E) shows the relation between the power supply voltage VB and a controllable threshold value and Fig. 11(F) shows the influence on a driver.

When the control calculation device 100 determines by using the power supply voltage monitoring function thereof that the power supply voltage VB reaches an abnormally high voltage (step 530, a time point t11), the control calculation device obtains the rotation angle of the motor 130 (or 140) (step S31), and calculates the rotation speed from the rotation angle (step S32) and also calculates the input torque (step S33). Thereafter, it is determined whether or not the rotation direction of the motor coincides with the direction of the input torque (step S34). When it is determined that the rotation direction of the motor does not coincide with the direction of the input torque, an amount of the electromagnetic brake is calculated in accordance with the rotation speed and the input value (steering torque T) from the torque sensor like the aforesaid manner and instructs the value (step S36).

Thereafter, the control calculation device instructs a duty ratio of the lower side FETs (Tr2, Tr4, Tr6) of the motor driving bridge circuit 110 (step S37) and returns the operation to step S31. In step S34, when it is determined that the rotation direction of the motor coincides with the direction of the input torque, the control calculation device instructs the tuning-off of the lower side FETs (Tr2, Tr4, Tr6) of the motor driving bridge circuit 110 (step S35) and proceeds the operation to step S37.

In the example of Fig. 11, an amount of the electromagnetic brake is reduced gradually in accordance with the rotation direction of the motor and the direction of the input torque during a time period from the time point t11 to a time point t12. Then, since the rotation direction of the motor coincides with the direction of the input torque at the time point t12, the electromagnetic brake is not operated any longer. In Fig. 11(B), since the rotation direction of the motor coincides with the direction of the input torque at a time period after the time point t12, the electromagnetic brake is placed in an off state thereafter. A dotted line in Fig. 11(A) represents the characteristics of a manual input torque (kick back) in the case of no electromagnetic brake. If the assist operation is turned off when the manual input is constant such as the case of a steering holding state, since the steering wheel acts to restore abruptly, the manual input signal is considered to be large relatively.

The method of operating the electromagnetic brake will be explained with reference to the accompanying drawings.

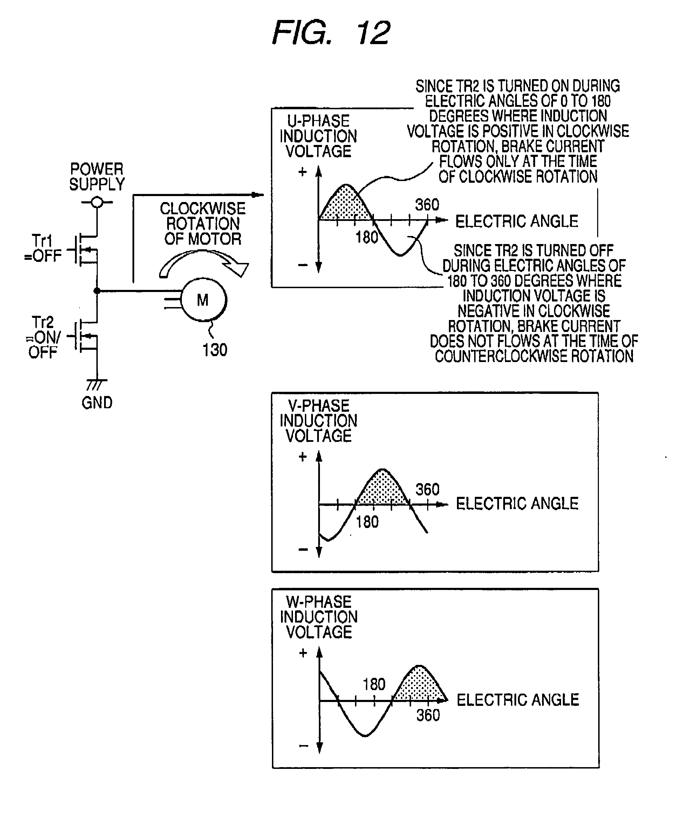

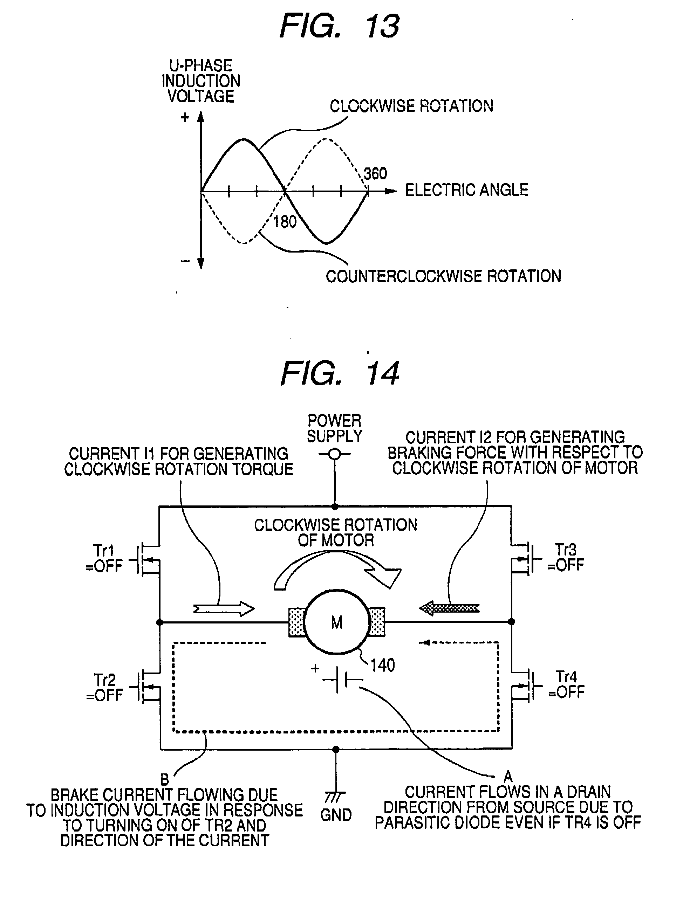

Fig. 12 shows a case where the electromagnetic brake is operated only for the clockwise rotation by the three-phase brushless motor 130. In the U-phase induction voltage of Fig. 12, a hatched area represents that since the FET Tr2 is turned on during the electric angles of 0 to 180 degrees where the induction voltage is positive in the clockwise rotation, the brake current flows only at the time of the clockwise rotation. A white area in the figure represents that since the FET Tr2 is turned off during the electric angles of 180 to 360 degrees where the induction voltage is negative in the clockwise rotation, the brake current does not flows at the time of the counterclockwise rotation. These are the same as to each of the V- and W-phases. Fig. 13 shows waveforms (phases) at the time of the clockwise rotation and the counterclockwise rotation of the U-phase, the waveforms are also in the opposite phases between the clockwise rotation and the counterclockwise rotation in each of the V- and W-phases.

Fig. 14 shows the relation between the electromagnetic braking direction and with respect to the brush motor 140 and the k'ETs Tr1, to Tr4 to be driven. It is required to flow a current I1 for generating a clockwise rotation torque in order to rotate the motor 140 clockwise. In this case, there flows a current I2 fro generating a braking force with respect to the clockwise rotation of the motor. Further, since the induction voltage at the time of the clockwise rotation is directed to a direction shown by A in the figure, the brake current flowing due to the induction voltage in response to the turning on of the FET Tr2 is directed to a direction shown by a dotted line B.

Although the explanation is made as an example of using the three-phase brushless motor, the invention is applicable in the case of using a multiphase motor of three or more phases or a brush motor.

While the invention has been described in connection with the exemplary embodiments, it will be obvious to those skilled in the art that various changes and modification may be made therein without departing from the present invention, and it is aimed, therefore, to cover in the appended claim all such changes and modifications as fall within the true spirit and scope of the present invention.

**Claims**

1. A control device for an electric power steering apparatus which comprises a motor applying a steering assist force, the control device driving the motor and comprising:

    a gate driving circuit which drives a motor driving bridge circuit based on a command from a computer, wherein a power supply portion of the gate driving circuit comprises a voltage limit unit, and
    a lower side driving elements of the motor driving bridge circuit is driven when the voltage limit unit detects an abnormally high voltage of a power supply voltage.

2. The control device for the electric power steering apparatus according to claim 1, wherein
    when the abnormally high voltage of the power supply voltage is detected, the lower side driving elements are turned on while each of upper side driving elements of the motor driving bridge circuit is kept to an off state thereby to operate the motor as an electromagnetic brake.

3. The control device for the electric power steering apparatus according to claim 2, wherein
    necessity of an operation of the electromagnetic brake is determined based on a SAT.

4. The control device for the electric power steering apparatus according to claim 1, further comprising:

    a storing unit that stores a steering state just before detection of the abnormally high voltage of the power supply voltage, wherein
    when the abnormally high voltage of the power supply voltage is detected, each of the lower side driving elements is subjected to an on/off control in accordance with the steering state to control the electromagnetic brake.

5. The control device for the electric power steering apparatus according to claim 4, further comprising:

    a direction determining unit that determines a direction to which the electromagnetic brake acts based on a direction of a steering torque, wherein
    one of the lower side driving elements to be turned on is selected in accordance with the determined direction to which the electromagnetic brake acts.

6. An electric power steering apparatus comprising:

a motor applying a steering assist force; and
a control device that drives the motor and comprises:

a gate driving circuit which drives a motor driving bridge circuit based on a command from a computer, wherein

a power supplyportion of the gate driving circuit comprises a voltage limit unit, and
a lower side driving elements of the motor driving bridge circuit is driven when the voltage limit unit detects an abnormally high voltage of a power supply voltage.

# FIG. 1

POWER SUPPLY VOLTAGE
MONITORING

POWER
SUPPLY

THREE-PHASE
BRUSHLESS MOTOR
3

101

TORQUE
SENSOR

VEHICLE SPEED
SENSOR

102

CONTROL CALCULATION DEVICE

GATE DRIVING CIRCUIT

MOTOR DRIVING BRIDGE

110

120

100

T

V

Tr1  Tr3  Tr5

Tr2  Tr4  Tr6

RLY1

RLY2

111

CURRENT
DETECTION
CIRCUIT

103

GND

104

ROTOR POSITION
DETECTION
CIRCUIT

EP 1 873 040 A2

# FIG. 2

# FIG. 3

## FIG. 4

BOOSTED
VOLTAGE

VOLTAGE [V]

MAXIMUM
Vgs

MINIMUM
Vgs

POWER SUPPLY
VOLTAGE

IMPOSSIBLE
TO BE ON
STATE

OPERABLE

IMPOSSIBLE
TO BE ON
STATE

POWER
SUPPLY
VOLTAGE
[V] VB

UPPER SIDE FET
OPERABLE RANGE

## FIG. 5

BOOSTED
VOLTAGE

POWER SUPPLY
VOLTAGE

VOLTAGE
[V]

MAXIMUM GATE-SOURCE
VOLTAGE

MINIMUM GATE-SOURCE
VOLTAGE

(LOWER SIDE FET)
(GATE VOLTAGE )

OPERATION OF FET
UPON HIGH VOLTAGE IS
MADE POSSIBLE DUE TO
PROVISION OF VOLTAGE
CLAMP CIRCUIT

POWER SUPPLY
VOLTAGE [V] VB

OPERABLE

UPPER SIDE FET OPERABLE
RANGE OF RELATED ART

## FIG. 6

```
                    ( START )
                        │
                        ▼
              ┌──────────────────┐  S1
              │  STORE STEERING  │
              │      STATE       │
              └──────────────────┘
                        │
                        ▼
                  ╱──────────╲  S2
                 ╱  ABNORMALLY ╲         NO
                ╱  HIGH VOLTAGE ╲──────────────────┐
                ╲       ?       ╱                   │
                 ╲─────────────╱                    │
                        │ YES                        │
                        ▼  S10                       ▼  S3
            ┌────────────────────┐      ┌──────────────────┐
            │      ESTIMATE      │      │    CALCULATE     │
            │ REACTION FORCE (SAT)│      │ STEERING ASSIST  │
            │     FROM WHEEL     │      │  COMMAND VALUE   │
            └────────────────────┘      └──────────────────┘
                        │                           │
                        ▼  S11                       ▼  S4
            ┌────────────────────┐      ┌──────────────────┐
            │ SAT > RATED VALUE ?│      │ CALCULATE CURRENT│
            └────────────────────┘      │  COMMAND VALUE   │
                        │                └──────────────────┘
                        │                           │
                        ▼  S12                       ▼  S5
                  ╱──────────╲          ┌──────────────────┐
        NO       ╱ ELECTROMAGNETIC ╲     │      ASSIST      │
    ┌───────────╱  BRAKE IS NECESSARY╲    └──────────────────┘
    │           ╲        ?          ╱            │
    │            ╲───────────────╱              │
    │                   │ YES  S13               │
    ▼  S20              ▼                        │
┌──────────────┐  ┌──────────────────┐          │
│ TURN UPPER AND│  │  TURN UPPER SIDE │          │
│ LOWER SIDE    │  │ FETs OFF AND TURN│          │
│ FETs OFF      │  │ LOWER SIDE FETs ON│         │
└──────────────┘  └──────────────────┘          │
    │                   │  S14                   │
    │                   ▼                        │
    │           ┌──────────────────┐             │
    │           │   OUTPUT ALARM   │             │
    │           └──────────────────┘             │
    │                   │  S15                   │
    │                   ▼                        │
    │           ┌──────────────────┐             │
    │           │  TURN LOWER SIDE │             │
    │           │ FETs OFF GRADUALLY│            │
    │           └──────────────────┘             │
    │                   │                        │
    ▼  S21              │                        │
┌──────────────┐◄───────┘                        │
│MANUAL STEERING│                                 │
│    STATE     │                                 │
└──────────────┘                                 │
```

# FIG. 7

**(A)**
**OPERATION STATE OF**
**UPPER SIDE FETs**

DUTY — 100% / 0%

NORMAL CONTROL — ON / OFF

**(B)**
**OPERATION STATE OF**
**LOWER SIDE FETs**

DUTY — 100% / 0%

NORMAL CONTROL — ON / OFF

t2

**(C)**
**POWER SUPPLY**
**VOLTAGE VB**

CONTROLLABLE THRESHOLD VALUE

t1   t3   t4   TIME

t0

**(D)**
**INFLUENCE ON DRIVER**

NORMAL STEERING

AVOID KICK BACK BY ELECTROMAGNETIC LOCK

GRADUALLY SHIFT TO MANUAL STEERING STATE

STEERING CAN BE MADE BY MANUAL STEERING

## FIG. 8

POWER SUPPLY VOLTAGE MONITORING

POWER SUPPLY

110A

MOTOR DRIVING BRIDGE

111A

BRUSH MOTOR
4

101

TORQUE SENSOR

102

VEHICLE SPEED SENSOR

CONTROL CALCULATION DEVICE

GATE DRIVING CIRCUIT

120

100

Tr1  Tr3

Tr2  Tr4

RLY1

M

CURRENT DETECTION CIRCUIT

103

GND

EP 1 873 040 A2

# FIG. 9

REACTION FORCE BY KICK BACK

INPUT TORQUE OF DRIVER

EPS

1

KICK BACK FROM ROAD SURFACE

# FIG. 10

```
                    ┌─────────────┐
                    │    START    │
                    └──────┬──────┘
                           │                    S30
                    ┌──────▼──────────┐
                    │ ABNORMALLY HIGH │
                    │VOLTAGE IS GENERATED│
                    └──────┬──────────┘
                           │                    S31
                    ┌──────▼──────────┐
                    │OBTAIN ROTATION ANGLE│
                    └──────┬──────────┘
                           │                    S32
                    ┌──────▼──────────┐
                    │ CALCULATE ROTATION │
                    │      SPEED      │
                    └──────┬──────────┘
                           │                    S33
                    ┌──────▼──────────┐
                    │CALCULATE INPUT TORQUE│
                    └──────┬──────────┘
                           │                    S34
                     ◇─────▼─────────◇   YES
                    ◇  MOTOR          ◇──────┐
                   ◇ROTATION DIRECTION ◇     │
                   ◇ = DIRECTION      ◇      │
                    ◇ OF INPUT TORQUE ◇      │
                     ◇     ?     ◇           │
                           │ NO             │
                           │          S36   │
          ┌────────────────▼────────────┐   │
          │INSTRUCT AMOUNT OF ELECTROMAGNETIC│  │
          │BRAKE IN ACCORDANCE WITH ROTATION│  │
          │ SPEED AND INPUT VALUE FROM  │   │
          │      TORQUE SENSOR          │   │
          └────────────────┬────────────┘   │
                           │          S35   ▼
                           │   ┌──────────────────────┐
                           │   │INSTRUCTS TUNING-OFF OF LOWER│
                           │   │ SIDE FETs TO MOTOR DRIVING │
                           │   │    BRIDGE CIRCUIT     │
                           │   └──────────┬───────────┘
                           │◄─────────────┘
                           │          S37
          ┌────────────────▼────────────┐
          │INSTRUCT DUTY RATIO OF LOWER SIDE│
          │FETs OF MOTOR DRIVING BRIDGE CIRCUIT│
          └────────────────┬────────────┘
                           │
                           └─────────────┐
```

## FIG. 11

**(A)**
TORQUE SENSOR SIGNAL
(= STEERING TORQUE T)

TORQUE SIGNAL

KICK BACK OF RELATED
ART IS REDUCED BY
ELECTROMAGNETIC BRAKING

**(B)**
MOTOR ANGULAR
SPEED

ANGULAR SPEED

ELECTROMAGNETIC BRAKE IS
TURNED OFF WHEN MOTOR
ROTATION DIRECTION IS
SAME AS DIRECTION OF
SENSOR SIGNAL

**(C)**
OPERATION STATE OF
UPPER SIDE FETs

DUTY 100%
0%

NORMAL
CONTROL OFF

ON

**(D)**
OPERATION STATE OF
LOWER SIDE FETs

DUTY 100%
0%

NORMAL
CONTROL

ON

OFF

**(E)**
POWER SUPPLY
VOLTAGE VB

CONTROLLABLE
THRESHOLD
VALUE

t10    t11    t12

TIME

**(F)**
INFLUENCE ON
DRIVER

NORMAL
STEERING

ADJUST ELECTROMAGNETIC BRAKE
OPERATION IN ACCORDANCE WITH
MOTOR ROTATION DIRECTION AND
INPUT TORQUE DIRECTION

ELECTROMAGNETIC BRAKE IS NOT OPERATED
WHEN MOTOR ROTATION DIRECTION
COINCIDES WITH INPUT TORQUE DIRECTION

# FIG. 12

POWER SUPPLY

Tr1 =OFF

Tr2 =ON/ OFF

GND

CLOCKWISE ROTATION OF MOTOR

M

130

U-PHASE INDUCTION VOLTAGE

+

−

180

360

ELECTRIC ANGLE

SINCE TR2 IS TURNED ON DURING ELECTRIC ANGLES OF 0 TO 180 DEGREES WHERE INDUCTION VOLTAGE IS POSITIVE IN CLOCKWISE ROTATION, BRAKE CURRENT FLOWS ONLY AT THE TIME OF CLOCKWISE ROTATION

SINCE TR2 IS TURNED OFF DURING ELECTRIC ANGLES OF 180 TO 360 DEGREES WHERE INDUCTION VOLTAGE IS NEGATIVE IN CLOCKWISE ROTATION, BRAKE CURRENT DOES NOT FLOWS AT THE TIME OF COUNTERCLOCKWISE ROTATION

V-PHASE INDUCTION VOLTAGE

+

−

180

360

ELECTRIC ANGLE

W-PHASE INDUCTION VOLTAGE

+

−

180

360

ELECTRIC ANGLE

# FIG. 13

# FIG. 14

## FIG. 15

# FIG. 16

EP 1 873 040 A2

EP 1 873 040 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3399226 B
- JP 2002369565 A